# EUROPEAN PATENT APPLICATION

(11) **EP 4 585 972 A1**
(43) Date of publication of application: **16.07.2025**
(21) Application number: 24151646.7
(22) Date of filing: 12.01.2024
(51) Int. Cl.: G01T 1/20, G01T 1/29

(54) **X-RAY DETECTOR MODULE, X-RAY SYSTEM, METHOD AND PROCESSING ELECTRONICS**

(71) Applicant: Koninklijke Philips N.V., 5656 AG Eindhoven (NL)
(72) Inventor: ENGEL, Klaus Jürgen, Eindhoven (NL); PROKSA, Roland, Eindhoven (NL); KOEHLER, Thomas, 5656AG Eindhoven (NL)
(74) Representative: Philips Intellectual Property & Standards

(57) **Abstract**

The invention relates to an X-ray detector module (1) with a scintillator plate (2), an array (3) of photodetectors (4) and processing electronics (5). The scintillator plate (2) has a front side (6) and a back side (7), and is configured to generate scintillator photons (11) upon interaction with an X-ray photon (10). The array (3) of photodetectors (4) is arranged at the back side (7) of the scintillator plate (2) and is configured to detect the scintillator photons (11) and to generate photon detection signals upon detection of the scintillator photons (11). The processing electronics (5) is configured to determine at least one center of at least one light cloud of the detected scintillator photons (11), respectively, by processing the photon detection signals and to output an X-ray detection signal based on the determined at least one center.

## Description

### FIELD OF THE INVENTION

The invention relates to an X-ray detector module, in particular for medical X-ray systems. The invention further relates to an X-ray system, a method for determining a center of detected scintillator photons in an array of photodetectors, and to processing electronics that carry out said method.

### BACKGROUND OF THE INVENTION

In medical imaging, X-ray flat detector arrays with a typical pixel pitch of approximately 150 µm are used to generate X-ray images in typical sizes of 20 cm to 40 cm. The state-of-the-art technology for X-ray energies larger than 20 keV, which are typically used for human body imaging, require a typical X-ray sensitive layer thicknesses ranging from 150 µm to 3000 µm, even for highly absorbing detector materials.

Relatively high spatial resolutions of 150 µm or better can be achieved using CsI as scintillation material, which is grown in a pillar-like structure enabling a light guiding effect to laterally confine optical scintillation light photons before detection with a photo diode array. Other scintillator materials are typically not used, because they cannot be grown in a pillar structure and thus produce a relatively large light spread, therefore not meeting the spatial resolution requirements.

As an alternative to optical scintillators, direct conversion materials (e.g., Si or Se) can be used to directly transform X-ray energy into electric charges creating a detection current in an electric field. This method is successfully used for X-ray photons with low energies (in the range below 50 keV), e.g., for mammography detectors. However, for higher X-ray energies, there may be technical challenges with thicker direct conversion detector layers, and the material costs may be high.

While many of the commercial detectors are based on the concept of signal accumulation (i.e., signal integration), detectors are available that are based on the principle of X-ray photon counting. These detectors may be based on scintillator technology as well as on direct conversion technology. Photon counting provides fundamentally a better signal-to-noise ratio especially for low X-ray flux, significantly improving image quality as compared to the traditional signal integrating technologies, and hence enabling reducing patient X-ray doses. However, these X-ray photon counting detectors may have a low spatial resolution, particularly if based on scintillator technology.

### SUMMARY OF THE INVENTION

It is therefore an object of the present invention to provide improved X-ray detection. In particular, it is an object of preferred embodiments of the present invention to provide X-ray detection that supports photon counting capability, with photon rates up to 10⁸ photons/(s mm²), that is suitable for X-ray energies up to 150 keV, and that provides spatial resolutions of 150 µm/pixel or better, for image sizes of at least 20 cm x 20 cm.

The invention is defined by the independent claims. Advantageous embodiments are defined in the dependent claims.

In a first aspect of the present invention, an X-ray detector module is provided. The X-ray detector module comprises a scintillator plate, an array of photodetectors, and processing electronics.

The scintillator plate has a front side that may be oriented towards a direction of incoming X-ray photons. In particular, the front side may be oriented towards an X-ray tube of an X-ray system. Further, the front side may be plane. Further, the scintillator plate has a back side, such that the front side and the back side are on opposite sides of the scintillator plate. In particular, the back side may be plane and/or may be parallel to the front side. Moreover, the scintillator plate may have lateral sides. Said lateral sides may be plane and/or may be curved and may also be referred to as lateral endings.

The scintillator plate is configured to generate scintillator photons upon interaction with an X-ray photon. In particular, said scintillator photons may be visible photons, ultraviolet photons, and/or infrared photons. The scintillator plate may be suitable for photon counting in an X-ray energy regime up to approximately 150 keV, which is often used for medical purposes. That is, the scintillator plate may have a primary decay time that is short enough to distinguish separate X-ray photons from one another.

The array of photodetectors is arranged at the back side of the scintillator plate. In particular, the array of photodetectors may be parallel to the back side of the scintillator plate. The array of photodetectors is configured to detect the scintillator photons and to generate photon detection signals upon detection of the scintillator photons. In particular, the photodetectors may be suitable for photon counting, i.e., the detection of the photons may be fast enough to distinguish separate X-ray photons from one another. Then, the detection of the scintillator photons corresponds to photon counting events.

The processing electronics is configured to determine at least one center of at least one light cloud of detected scintillator photons, respectively, by processing the photon detection signals. In other words, the processing electronics takes the photon detection signals that were generated by the array of photodetectors as input. An incident X-ray photon will lead to a plurality of scintillator photons that will be detected by the photodetectors. In particular, at least some of the photodetectors that have detected scintillator photons will form a light cloud. The light cloud of detected scintillator photons may be a contiguous area of detected scintillator photons. Determining the center of such a light cloud may be referred to as a collapse of the light cloud. In particular, coincidently detected photon detection signals may be processed to determine the center of said light cloud in real-time. In particular, the speed of said processing may be conforming to the incident X-ray photon rates, i.e., the processing may be fast enough such that a probability of two separate X-ray photons yielding overlapping areas of detected scintillator photons within the processing time is reasonably low, e.g., less than 5 % or less than 1 %.

Further, the processing electronics is configured to output an X-ray detection signal based on the determined at least one center. In particular, the detection event may be registered by incrementing only a single pixel counter at said center position.

The above-described X-ray detector module provides X-ray photon counting with high spatial resolution and a high X-ray quantum efficiency, in particular for X-ray energies up to 150 keV. The X-ray detector module may be used as a high-resolution flat panel X-ray detector, e.g., for medical imaging systems like C-arms or diagnostic X-ray imagers. The high resolution combined with the high X-ray quantum efficiency allows to use a reasonably low X-ray dose on the patient.

According to an embodiment, determining the at least one center of the at least one light cloud of detected scintillator photons comprises applying a cellular automaton algorithm in the spatial and the temporal domain to reduce the light cloud of the detected scintillator photons to the X-ray detection signal corresponding to a single photodetector. That is, after processing, a count is assigned to a single photodetector. According to the terminology used for cellular automatons, the term "cells" may be used for the individual photodetectors. The cells of an array corresponding to the array of photodetectors are activated (i.e., "born" or "revived", e.g., in context of light detection) and deactivated (i.e., "die", e.g., in context of recognition that a cell will not contribute to find the center of said light cloud any more) according to automaton rules. Said automaton rules may be specific automaton rules assigned to a cell grid geometry. The automaton rules comprise inspecting a status of neighboring cells and/or inspecting the status of the cell under consideration and/or neighboring cells in previous processing cycles. Furthermore, the automaton rules are deterministic. Also, the automaton rules may contain rules to avoid "dead locks" in the automaton algorithm potentially hindering a collapsing of said set of cells to a final photodetector triggering a "photon count". Said automaton rules may be processed very quickly, enabling counting of the X-ray photons.

According to an embodiment, the automaton rules for a rectangular grid structure of cells comprise the following: A cell is activated when the corresponding photodetector is triggered. This activation may be an initial activation of the cell (the cell is "born") or an activation of a cell that has been previously deactivated (the cell is "revived"). Next, neighboring cells of the active cells are inspected: If, in a neighboring column or row, no direct neighboring cells are found that are active, and if the corresponding photodetector is not triggered, the cell is deactivated (the cell "dies"). For a grid array of photodetectors, direct neighboring cells may be both adjacent cells (i.e., to the left, right, top and bottom) and, in some embodiments, diagonally neighboring cells. If the cell stays active, i.e., if an active cell is not deactivated, an internal counter of the cell is incremented. In particular, said internal counter may be reset, e.g., to zero or one, when the cell is deactivated. The increment may be arbitrary, however an increment of one is computationally most easy. An X-ray detection signal is triggered by the cell if the following conditions are met: i) the cell is deactivated (i.e., the cell "dies"), ii) the internal counter is greater than a predetermined counter, e.g., greater than three, five, or ten, iii) no direct neighboring cell is active, and iv) no direct neighboring cell has triggered an X-ray detection signal in the same evaluation cycle yet. This algorithm is easy, can be implemented with automaton techniques and provides fast processing, such that the cells are cleared for the detection of the next scintillator photons.

If a group of, i.e., at least two, neighboring cells are deactivated in the same evaluation cycle, only one of them shall trigger the X-ray detection signal. In this case, the cell with the highest internal counter value may trigger the X-ray detection signal. If some or all of these cells have the same internal counter value, an arbitrary choice may be made, e.g., the cell with the lowest row and column numbers triggers the X-ray detection signal.

Alternatively, the cells might be deactivated not simultaneously, but in a sequence, to avoid a deadlock of the automaton algorithm, and keep signal processing simple on a hardware implementation. In a sequential processing, only the first cell to be deactivated in said sequence but fulfilling the conditions for triggering an X-ray detection is used for triggering the X-ray detection event, while all following cells in said sequence are ignored for triggering an X-ray detection event. Such an implementation avoids a potentially complex comparison mechanism of the internal counter values.

According to an embodiment, the scintillator plate has a primary decay time of less than 100 ns. With this short primary decay time, separate X-ray photons may be distinguished from one another even for high X-ray photon rates suitable for medical imaging. More particularly, the primary decay time of the scintillator plate is less than 50 ns, most particularly less than 30 ns, to enable even higher rates of X-ray photons.

According to an embodiment, the scintillator plate is a garnet-based scintillator. Garnet-based scintillators enable the above-mentioned primary decay times, hence, they are suitable for X-ray photon counting with high rates of X-ray photons. As an example, a LuAlO₃:Ce (LuAP) scintillator may be used. As another example, a Lu₂SiO₅:Ce (LSO) scintillator may be used. Both the LuAP and the LSO scintillators may be produced in thicknesses that support enough quantum efficiency for typical X-ray energies.

According to an embodiment, a thickness of the scintillator plate is between 0.5 mm and 2 mm, more particularly approximately 1 mm. With scintillator plates of these thicknesses, a high X-ray quantum efficiency is provided. Further, the given thicknesses are still thin enough to produce scintillator light cones that are small enough to not overlap with neighboring scintillator light cones at high X-ray photon rates and to be analyzed with the processing electronics. In particular, a typical spread of scintillator photons with scintillator plates of the given thicknesses is on the order of 1 mm.

According to an embodiment, the front side and/or the lateral sides of the scintillator plate are absorbing for scintillator photons. That is, the front side and/or the lateral sides of the scintillator plate may be equipped with photons sinks, e.g., with black materials. This may be achieved, for example, by surface processing of the scintillator plate. Hence, scintillator photons that do not exit the scintillator plate on the back side of the scintillator plate get absorbed instead of being back-reflected to the back side and do not lead to a widening of the area of detected scintillator photons.

Alternatively, or additionally, the front side and/or the lateral sides of the scintillator plate are reflecting for scintillator photons. This may also be achieved by surface processing of the scintillator plate, in particular by polishing the respective sides and/or by applying a reflective layer to the respective sides, e.g., a metal layer or thin-layer interference coating. While scintillator photons that are emitted at small angles (with respect to a normal to the front side) towards the front side will be reflected by the front side and may exit the scintillator plate through the back side, scintillator photons that are emitted at angles to the normal to the front side that would lead to a total reflection will be perfectly reflected and do not exit the scintillator plate through the back side. In this configuration, a higher light yield is reached, however, at the cost of a moderately larger light cloud area exiting the backside.

An example for a combination of absorbing sides and reflecting sides is that the front side is reflecting for scintillator photons and the lateral sides are absorbing for scintillator photons. Hence, scintillator photons that are emitted at angles larger than the angle for total reflection at the back side will be reflected by the back side and front side until they reach a lateral side, where they are absorbed.

According to an embodiment, a localization layer is arranged between the scintillator plate and the array of photodetectors. In particular, said localization layer is configured such that only photons that are emitted at relatively small angles with respect to the normal to the front side and/or back side can exit the scintillator plate, such that the area of detected scintillator photons is kept relatively small. As an example, the localization layer may be an air gap. When the back side of the scintillator plate is polished, only scintillator photons emitted at angles smaller than the angle for total reflection of the scintillator plate can exit the scintillator plate, hence a localization is given. As another example, the localization layer is a glue of a low refractive index. In this case, the angle for total reflection is a bit larger compared to the case of an air gap, however the glue can be used to bond the scintillator plate to the array of photodetectors, simplifying the construction of the X-ray detector module.

According to an embodiment, a photosensitive part of the array of photodetectors covers a large part of the area where photons exiting the back side of the scintillator plate are detectable, as to provide a high quantum efficiency. Preferentially, the sensitive area is at least 50% of the total area, more preferentially, it is at least 80% of the total area.

According to an embodiment, the array of photodetectors forms a regular grid. This grid might consist of photodetectors having a uniform shape of a triangle or shapes constructed from triangle base forms, like a square, a rectangle, a rhomb, a trapeze, or a hexagon.

According to an embodiment, a distance between a photodetector to a neighboring photodetector in the array of photodetectors is less than or equal to 250 µm, more particularly less than or equal to 150 µm. Hence, a high resolution on the order of said distance is provided. If the array of photodetectors is a grid of photodetectors, the distance between a photodetector to a neighboring photodetector may also be referred to as pixel pitch.

According to an embodiment, the photodetectors are silicon photo multipliers. Silicon photo multipliers may also be referred to as multi-pixel photon counters. They work with a semiconductor charge avalanche technology and are extremely sensitive, even to single scintillator photons. They can be produced cost-efficiently and in arrays with small pixel sizes, fulfilling the condition given above. In practice, they switch their "binary state" once a scintillator photon is detected. Silicon photo multipliers achieve a very high single scintillator photon sensitivity with very short reset times, hence they are ideal for the application in the X-ray detector module. Alternatively, the photodetectors are avalanche photodiodes. Avalanche photodiodes also provide a high sensitivity to scintillator photons and are also very fast.

According to an embodiment, the processing electronics includes an application-specific integrated circuit (ASIC). ASICs provide fast processing times that makes it possible to process high photon rates with the X-ray detector module, especially for pure digital logic arrays.

In another aspect of the invention, an X-ray imaging system is provided. Said X-ray imaging system comprises an X-ray tube and an X-ray detector module according to the above description. The X-ray imaging system provides a high resolution combined with a high X-ray quantum efficiency, allowing to use a lower X-ray dose on a patient. Further details, embodiments and advantages are given in the above description.

In yet another aspect of the invention, a method for determining at least one center of at least one light cloud of detected scintillator photons in an array of photodetectors is provided. In particular, said method may be performed by processing electronics. According to the method, photon detection signals are received from the array of photodetectors. As an example, the photodetectors may switch their binary state upon detection of a scintillator photon, and the processing electronics reads out said binary state. Then, a cellular automaton algorithm is applied in the spatial and the temporal domain to reduce the light cloud of the detected scintillator photons to the X-ray detection signal corresponding to a single photodetector. That is, after processing, a count is assigned to a single photodetector. According to the terminology used for cellular automatons, the term "cells" may be used for the individual photodetectors. The cells of an array corresponding to the array of photodetectors are activated (i.e., "born" or "revived", e.g., in context of light detection) and deactivated (i.e., "die", e.g., in context of recognition that a cell will not contribute to find the center of said light cloud any more) according to automaton rules. Said automaton rules may be specific automaton rules assigned to a cell grid geometry. The automaton rules comprise inspecting a status of neighboring cells and/or inspecting the status of the cell under consideration and/or neighboring cells in previous processing cycles. Furthermore, the automaton rules are deterministic. Also, the automaton rules may contain rules to avoid "dead locks" in the automaton algorithm potentially hindering a collapsing of said set of cells to a final photodetector triggering a "photon count". Said automaton rules may be processed very quickly, enabling counting of the X-ray photons.

According to an embodiment, the automaton rules for a rectangular grid structure of cells comprise the following: A cell is activated when the corresponding photodetector is triggered. This activation may be an initial activation of the cell (the cell is "born") or an activation of a cell that has been previously deactivated (the cell is "revived"). Further, the neighboring cells of the active cells are inspected: If, in a neighboring column or row, no direct neighboring cells are found that are active, and if the corresponding photodetector is not triggered, the cell is deactivated (the cell "dies"). For a grid array of photodetectors, direct neighboring cells may be both adjacent cells (i.e., to the left, right, top and bottom) and, in some embodiments, diagonally neighboring cells. If the cell stays active, i.e., if an active cell is not deactivated, an internal counter of the cell is incremented. In particular, said internal counter may be reset, e.g., to zero or one, when the cell is deactivated. The increment may be arbitrary, however an increment of one is computationally most easy. An X-ray detection signal is triggered by the cell if the following conditions are met: i) the cell is deactivated (i.e., the cell "dies"), ii) the internal counter is greater than a predetermined counter, e.g., greater than three, five, or ten, iii) no direct neighboring cell is active, and iv) no direct neighboring cell has triggered an X-ray detection signal in a same evaluation cycle yet. This method is easy, can be implemented with automaton techniques and provides fast processing, such that the cells are cleared for the detection of the next scintillator photons.

If a group of, i.e., at least two, neighboring cells are deactivated in the same evaluation cycle, only one of them shall trigger the X-ray detection signal. In this case, the cell with the highest internal counter value may trigger the X-ray detection signal. If some or all of these cells have the same internal counter value, an arbitrary choice may be made, e.g., the cell with the lowest row and column numbers triggers the X-ray detection signal.

Alternatively, the cells might be deactivated not simultaneously, but in a sequence, to avoid a deadlock of the automaton algorithm, and keep signal processing simple on a hardware implementation. In a sequential processing, only the first cell to be deactivated in said sequence but fulfilling the conditions for triggering an X-ray detection is used for triggering the X-ray detection event, while all following cells in said sequence are ignored for triggering an X-ray detection event. Such an implementation avoids a potentially complex comparison mechanism of the internal counter values.

In yet another aspect of the invention, processing electronics that are configured to perform the above-described method are provided. This processing electronics provides fast processing, such that the cells are cleared for the detection of the next scintillator photons.

According to an embodiment, the processing electronics is an application-specific integrated circuit (ASIC). ASICs provide fast processing times that makes it possible to process high photon rates with an X-ray detector module, especially for pure digital logic arrays.

These and other aspects of the invention will be apparent from and elucidated with reference to the embodiments described hereinafter.

### BRIEF DESCRIPTION OF THE DRAWINGS

In the following, preferred embodiments of the invention will be described, by way of example only, and with reference to the drawings in which:
Fig. 1 shows a schematic cross-section through an embodiment of an X-ray detector module;
Fig. 2 shows a schematic cross-section through another embodiment of an X-ray detector module;
Fig. 3 shows a schematic cross-section through the X-ray detector of Fig. 2 with an X-ray photon event;
Figs. 4a - 4d show arrays of cells of processing electronics; and
Fig. 5 shows a schematic view of an embodiment of an X-ray imaging system.

In the figures, elements which correspond to elements already described may have the same reference numerals. Examples, embodiments or optional features, whether indicated as non-limiting or not, are not to be understood as limiting the invention as claimed.

### DETAILED DESCRIPTION OF EMBODIMENTS

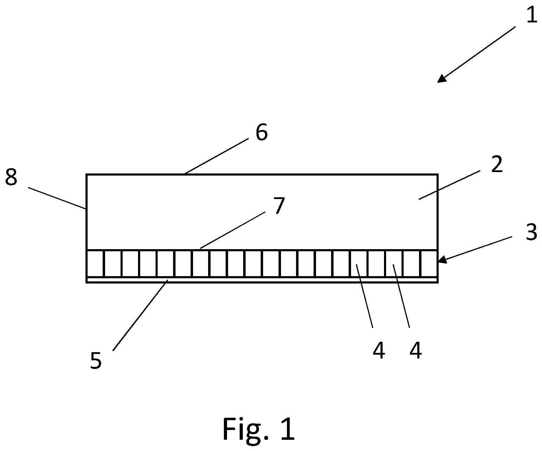

Fig. 1 shows a schematic cross-section through an embodiment of an X-ray detector module 1 that may be used as a high-resolution flat panel X-ray detector, e.g., for medical imaging systems like C-arms or diagnostic X-ray imagers. The X-ray detector module 1 comprises a scintillator plate 2, an array 3 of photodetectors 4, and processing electronics 5.

The scintillator plate 2 has a front side 6 that may be oriented towards a direction of incoming X-ray photons as exemplified in the figure. In particular, the front side 6 may be oriented towards an X-ray tube of an X-ray system. In the figure, the front side 6 is plane. Further, the scintillator plate 2 has a back side 7, such that the front side 6 and the back side 7 are on opposite sides of the scintillator plate 2. The back side 7 in the figure is also plane and is parallel to the front side 6. However, the front and/or back side may alternatively be curved. Moreover, the scintillator plate 2 may have lateral sides 8. Said lateral sides 8 may be plane as shown in the figure but may also be curved.

The scintillator plate 2 is configured to generate scintillator photons upon interaction with an X-ray photon. In particular, said scintillator photons may be visible photons, ultraviolet photons, and/or infrared photons. The scintillator plate 2 may be suitable for photon counting in an X-ray energy regime up to approximately 150 keV, which is often used for medical purposes.

The scintillator plate 2 may have a primary decay time of less than 100 ns, more particularly less than 50 ns, most particularly less than 30 ns. With this short primary decay time, separate X-ray photons may be distinguished from one another even for high X-ray photons rates suitable for medical imaging. As an example, the scintillator plate 2 may be a garnet-based scintillator. Garnet-based scintillators enable the above-mentioned primary decay times, hence, they are suitable for X-ray photon counting with high rates of X-ray photons. As a specific example, a LuAlO3:Ce (LuAP) scintillator with a primary decay time of 18 ns may be used. As another specific example, a Lu2SiO5:Ce (LSO) scintillator with a primary decay time of 38 ns may be used. Both the LuAP and the LSO scintillators may be produced in thicknesses that support enough quantum efficiency for typical X-ray spectra.

The front side 6 and/or the lateral sides 8 of the scintillator plate 2 may be absorbing for scintillator photons. That is, the front side 6 and/or the lateral sides 8 of the scintillator plate 2 may be equipped with photons sinks, e.g., with black materials. This may be achieved, for example, by surface processing of the scintillator plate 2. Hence, scintillator photons that do not exit the scintillator plate 2 on the back side 7 of the scintillator plate 2 get absorbed and do not lead to a widening of the area of detected scintillator photons.

Alternatively, or additionally, the front side 6 and/or the lateral sides 8 of the scintillator plate 2 may be reflecting for scintillator photons. This may also be achieved by surface processing of the scintillator plate 2, in particular by polishing the respective sides 6, 8 and/or by applying a reflective layer to the respective sides 6, 8, e.g., a metal layer or thin-layer interference coating. While scintillator photons that are emitted at small angles (with respect to a normal to the front side 6) towards the front side 6 will be reflected by the front side 6 and may exit the scintillator plate through the back side 7, scintillator photons that are emitted at angles to the normal to the front side 6 that would lead to a total reflection will be perfectly reflected and do not exit the scintillator plate 2 through the back side 7.

In a specific example, absorbing sides and reflecting sides are combined: the front side 6 is reflecting for scintillator photons and the lateral sides 8 are absorbing for scintillator photons. Hence, scintillator photons that are emitted at angles larger than the angle for total reflection at the back side 7 will be reflected by the back side 7 and front side 6 until they reach a lateral side 8, where they are absorbed.

The array 3 of photodetectors 4 is arranged at the back side 7 of the scintillator plate 2. In particular, the array 3 of photodetectors 4 is parallel to the back side 7 of the scintillator plate 2. The array 3 of photodetectors 4 is configured to detect the scintillator photons and to generate photon detection signals upon detection of the scintillator photons. In particular, the photodetectors 4 may be suitable for photon counting, wherein the detection of the scintillator photons corresponds to photon counting events.

A distance between a photodetector 4 to a neighboring photodetector 4 in the array 3 of photodetectors 4 may be less than or equal to 250 µm, more particularly less than or equal to 150 µm. Hence, a high resolution on the order of said distance is provided. If the array 3 of photodetectors 4 is a grid of photodetectors 4, the distance between a photodetector 4 to a neighboring photodetector 4 may also be referred to as pixel pitch.

The photodetectors 4 may be silicon photo multipliers. Silicon photo multipliers may also be referred to as multi-pixel photon counters. They work with a semiconductor charge avalanche technology and are extremely sensitive, even to single scintillator photons. They can be produced cost-efficiently and in arrays with small pixel sizes, fulfilling the condition given above. In practice, they switch their "binary state" once a scintillator photon is detected. Silicon photo multipliers achieve a very high single scintillator photon sensitivity with very short reset times, hence they are ideal for the application in the X-ray detector module 1. Alternatively, the photodetectors 4 are avalanche photodiodes. Avalanche photodiodes also provide a high sensitivity to scintillator photons and are also very fast. The processing electronics 5 is configured to determine at least one center of at least one light cloud of detected scintillator photons, respectively, by processing the photon detection signals. In other words, the processing electronics 5 takes the photon detection signals that were generated by the array 3 of photodetectors 4 as input. An incident X-ray photon will lead to a plurality of scintillator photons that will be detected by the photodetectors 4. In particular, at least many of the photodetectors 4 that have detected scintillator photons will form a light cloud. The light cloud of detected scintillator photons may be a contiguous area of detected scintillator photons. Determining the center of such a light cloud may be referred to as a collapse of the light cloud. In particular, coincidently detected photon detection signals may be processed to determine the center of said light cloud in real-time. In particular, the speed of said processing may be conforming to the incident X-ray photon rates, i.e., the processing may be fast enough such that a probability of two separate X-ray photons yielding overlapping areas of detected scintillator photons within the processing time is reasonably low, e.g., less than 5 % or less than 1 %.

Further, the processing electronics 5 is configured to output an X-ray detection signal based on the determined at least one center. In particular, the detection event may be registered by incrementing only a single pixel counter at said center position.

The processing electronics 5 may be an application-specific integrated circuit (ASIC). ASICs provide the fast processing times that are suitable to process high photon rates with the X-ray detector module 1, especially for pure digital logic arrays.

The above-described X-ray detector module 1 provides X-ray photon counting with high spatial resolution and a high X-ray quantum efficiency, in particular for X-ray energies up to 150 keV. The high resolution combined with the high X-ray quantum efficiency allows to use a lower X-ray dose on a patient.

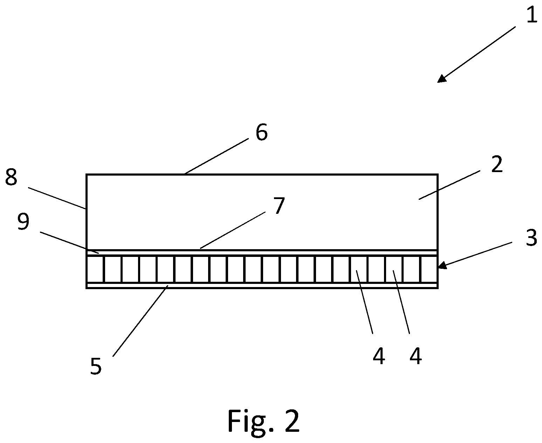

Fig. 2 shows a schematic cross-section through another embodiment of an X-ray detector module 1. In this X-ray detector module 1, a localization layer 9 is arranged between the scintillator plate 2 and the array 3 of photodetectors 4. Said localization layer 9 is configured such that only photons that are emitted at relatively small angles with respect to the normal to the front side 6 and/or back side 7 can exit the scintillator plate 2, such that the area of detected scintillator photons is kept relatively small. As an example, the localization layer 9 may be an air gap. When the back side 7 of the scintillator plate 2 is polished, only scintillator photons emitted at angles smaller than the angle for total reflection of the scintillator plate 2 can exit the scintillator plate 2, hence a localization is given. As another example, the localization layer 9 is a glue of a low refractive index. In this case, the angle for total reflection is a bit larger compared to the case of an air gap, however the glue can be used to bond the scintillator plate 2 to the array 3 of photodetectors 4, simplifying the construction of the X-ray detector module 1.

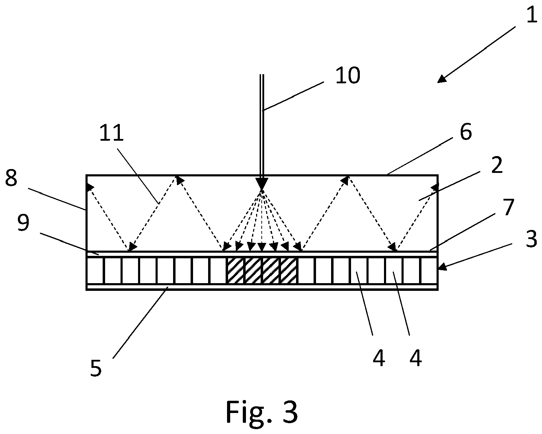

Fig. 3 shows a schematic cross-section through the X-ray detector module 1 of Fig. 2 with an X-ray photon 10 hitting the scintillator plate 2 and causing the generation of scintillator photons 11. The scintillator photons 11 might only escape the scintillator plate 2 in an area where the incidence angle of the scintillator photons (i.e., the angle between the trajectory and the normal to the back side 7) is smaller than a critical total reflection angle. The scintillator photons 11 that fulfil the total reflection condition stay inside the scintillator plate 2 until getting absorbed, in particular at the lateral sides 8. The critical angle α_{TR} is calculated by Snell's law of refraction considering the refractive indices of the scintillator material (e.g., for LuAP, *n_{LuAP}* = 1.94), and the connection material towards the detector array (e.g., air, *nₐᵢᵣ* = 1.0). The critical angle of total reflexion gets *α_{TR}* = arcsm(*nₐᵢᵣ*/*n_{LuAP}*), e.g., for a LuAP/air interface *α_{TR}* = 31°. For a 1 mm thick LuAP layer, the radius of the "light exit" area would therefore be maximal 1mm ·tan(*α_{TR}*) ~0.6 mm in case of an absorbing front side 6 (and assuming that light arises close to the top surface), or two times this value (i.e. ~1.2 mm) in case of an ideal reflecting front side 6, if in worst case the scintillation event is close the back side 7 and lights exits the back side 7 after a reflection at the front side 6. Hence, a 1 mm thick scintillator plate 2 leads to a light exit area of at most 2.4 mm in diameter. Therefore, for a good balance of X-ray detection efficiency and size of the exit area, the thickness of the scintillator plate may be between 0.5 mm and 2 mm, in particular approximately 1 mm.

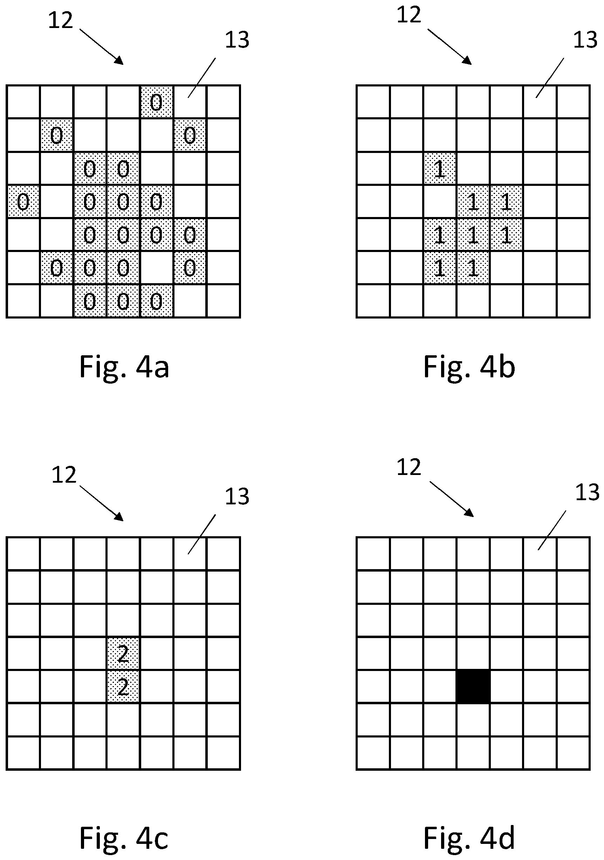

Figs. 4a - 4d illustrate a method for determining at least one center of at least one light cloud of detected scintillator photons 11 in an array 3 of photodetectors with an array 12 of cells 13 of the processing electronics 5.

In general, said method may be performed by receiving photon detection signals from the array 3 of photodetectors 4. As an example, the photodetectors 4 may switch their binary state upon detection of a scintillator photon, and the processing electronics 5 reads out said binary state. Then, a cellular automaton algorithm may be applied in the spatial and the temporal domain to reduce the light cloud of the detected scintillator photons to the X-ray detection signal corresponding to a single photodetector 4. That is, after processing, a count is assigned to a single photodetector 4. According to the terminology used for cellular automatons, the term "cells" may be used for the individual photodetectors 4. The cells 13 of an array 12 corresponding to the array 3 of photodetectors 4 may be activated (i.e., "born" or "revived", e.g., in context of light detection) and deactivated (i.e., "die", e.g., in context of recognition that a cell will not contribute to find the center of said light cloud any more) according to automaton rules. Said automaton rules may be specific automaton rules assigned to a cell grid geometry. The automaton rules may comprise inspecting a status of neighboring cells and/or inspecting the status of the cell under consideration and/or neighboring cells in previous processing cycles. Furthermore, the automaton rules may be deterministic. Also, the automaton rules may contain rules to avoid "dead locks" in the automaton algorithm potentially hindering a collapsing of said set of cells to a final photodetector triggering a "photon count". Said automaton rules may be processed very quickly, enabling counting of the X-ray photons.

As a specific example, Fig. 4a shows the array 12 of cells 13 of the processing electronics 5 in a state where some of the cells 13 have been activated because the corresponding photodetector 4 has been triggered. The activated cells 13 are shown with a shaded background. Further, an internal counter of each activated cell 13 had been set to zero.

In transition to the next processing step, shown in Fig. 4b, the following rules are applied: if, in at least one neighboring column or row, no direct neighboring cells 13 are found that are active, and if the corresponding photodetector 4 is not triggered, the cell 13 is deactivated. Further, if the cell 13 stays active, the internal counter of the cell 13 is incremented. In the example in Figs. 4a - 4d, diagonally neighboring cells are also considered as direct neighboring cells in the corresponding adjacent positions. E.g., a diagonally neighboring cell in a 'top left' neighboring position counts as an adjacent direct neighboring cell 'left' and an adjacent direct neighboring cell 'top'.

The same rules are applied for the transition to the next step, shown in Fig. 4c.

For the transition to the next step, shown in Fig. 4d, the following additional rule becomes relevant: if the cell 13 is deactivated, the internal counter is greater than a predetermined threshold, no direct neighboring cell 13 is active, and no direct neighboring cell 13 has triggered an X-ray detection signal in a same evaluation cycle yet, the X-ray detection signal is triggered by the cell 13. In this (small) example, the predetermined threshold is 1, hence both of the remaining cells 13 of Fig. 4c would fulfill the conditions, except for that no direct neighboring cell 13 has triggered the X-ray detection signal. In this case, the cell 13 with the higher value of the internal counter may be chosen to trigger the X-ray detection signal. Since, in the example, both remaining cells 13 have the same internal counter value, an arbitrary choice is made, e.g., the cell 13 with the lower row and/or column value triggers the X-ray detection signal. The X-ray detection signal is shown as a black cell. Alternatively, the cells might be deactivated not simultaneously, but in a sequence, to avoid a deadlock of the automaton algorithm, and keep signal processing simple on a hardware implementation. In a sequential processing, only the first cell to be deactivated in said sequence but fulfilling the conditions for triggering an X-ray detection is used for triggering the X-ray detection event, while all following cells in said sequence are ignored for triggering an X-ray detection event.

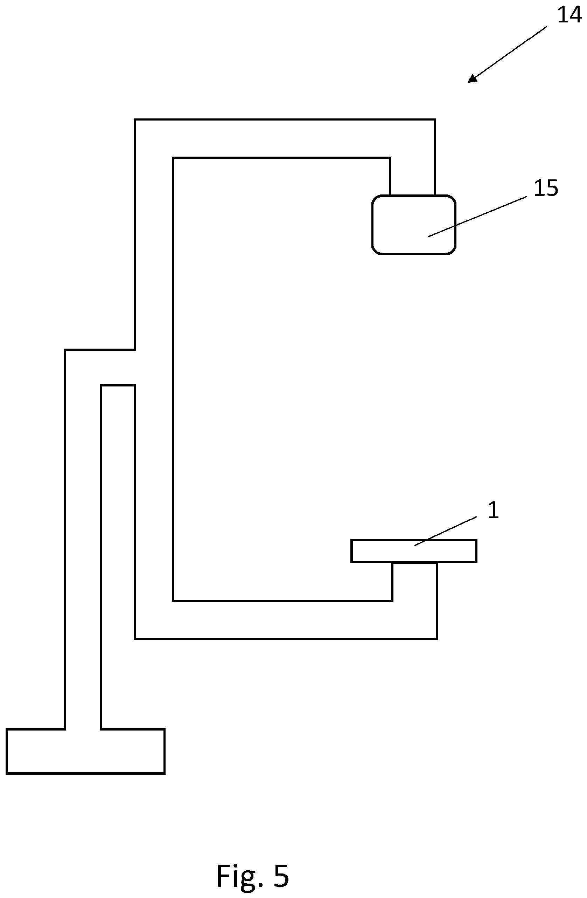

Fig. 5 shows a schematic view of an embodiment of an X-ray imaging system 14. The X-ray imaging system 14 comprises an X-ray tube 15 and an X-ray detector module 1, wherein the X-ray detector module 1 is the X-ray detector module 1 according one of the above-described examples. Hence, the above-described advantages also apply to the X-ray imaging system 14. While the X-ray imaging system 14 is shown as a C-arm imaging system, other X-ray imaging systems 14 may also comprise the X-ray detector module 1.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. Measures recited in mutually different dependent claims may advantageously be combined. Any reference signs in the claims should not be construed as limiting the scope.

### LIST OF REFERENCE SIGNS:

- 1: X-ray detector module
- 2: scintillator plate
- 3: array of photodetectors
- 4: photodetector
- 5: processing electronics
- 6: front side
- 7: back side
- 8: lateral side
- 9: localization layer
- 10: X-ray photon
- 11: scintillator photon
- 12: array of cells
- 13: cell
- 14: X-ray imaging system
- 15: X-ray tube

## Claims

1. An X-ray detector module (1), comprising:
a scintillator plate (2) with a front side (6), a back side (7) opposite to the front side, and preferably lateral sides (8), the scintillator plate (2) being configured to generate scintillator photons (11) upon interaction with an X-ray photon (10);
an array (3) of photodetectors (4), arranged at the back side (7) of the scintillator plate (2) and configured to detect the scintillator photons (11) and to generate photon detection signals upon detection of the scintillator photons (11); and
processing electronics (5), configured to determine at least one center of at least one light cloud of the detected scintillator photons (11), respectively, by processing the photon detection signals and to output an X-ray detection signal based on the determined at least one center.

2. The X-ray detector module (1) according to claim 1, wherein determining the at least one center of the at least one light cloud of detected scintillator photons (11) comprises applying a cellular automaton algorithm in the spatial and the temporal domain to reduce the light cloud of the detected scintillator photons (11) to the X-ray detection signal corresponding to a single photodetector (4), wherein
cells (13) of an array (12) corresponding to the array (3) of photodetectors (4) are activated and deactivated according to automaton rules, wherein the automaton rules
comprise inspecting a status of neighboring cells (13) and/or inspecting the status of the cell (13) under consideration and/or neighboring cells (13) in previous processing cycles; and
are deterministic.

3. The X-ray detector module (1) according to claim 2, wherein the automaton rules for a rectangular grid structure of cells comprise:
when the corresponding photodetector (4) is triggered, the cell (13) is activated;
if, in a neighboring column or row, no direct neighboring cells (13) are found that are active, and if the corresponding photodetector (4) is not triggered, the cell (13) is deactivated;
if the cell (13) stays active, an internal counter of the cell (13) is incremented; and
if the cell (13) is deactivated, the internal counter is greater than a predetermined threshold, no direct neighboring cell (13) is active, and no direct neighboring cell (13) has triggered an X-ray detection signal in a same evaluation cycle yet, the X-ray detection signal is triggered by the cell (13).

4. The X-ray detector module (1) according to any of the preceding claims, wherein
the scintillator plate (2) has a primary decay time of less than 100 ns, preferably less than 50 ns, more preferably less than 30 ns; and/or
the scintillator plate (2) is a garnet-based scintillator, preferably a LuAlO₃:Ce, LuAP, scintillator or a Lu₂SiO₅:Ce, LSO, scintillator.

5. The X-ray detector module (1) according to any of the preceding claims, wherein a thickness of the scintillator plate (2) is between 0.5 mm and 2 mm, preferably approximately 1 mm.

6. The X-ray detector module (1) according to any of the preceding claims, wherein
the front side (6) and/or the lateral sides (8) of the scintillator plate (2) are absorbing for scintillator photons (11); and/or
the front side (6) and/or the lateral sides (8) of the scintillator plate (2) are reflecting for scintillator photons (11).

7. The X-ray detector module (1) according to any of the preceding claims, wherein a localization layer (9) is arranged between the scintillator plate (2) and the array (3) of photodetectors (4), wherein, more particularly, the localization layer (9) is an air gap or a glue of a low refractive index.

8. The X-ray detector module (1) according to any of the preceding claims, wherein a distance between a photodetector (4) to a neighboring photodetector (4) in the array (3) of photodetectors (4) is less than or equal to 250 µm, preferably less than or equal to 150 µm.

9. The X-ray detector module (1) according to any of the preceding claims, wherein the photodetectors (4) are silicon photo multipliers or avalanche photodiodes.

10. The X-ray detector module (1) according to any of the preceding claims, wherein the processing electronics (5) includes an application-specific integrated circuit, ASIC.

11. An X-ray imaging system, comprising
an X-ray tube; and
an X-ray detector module (1) according to any one of claims 1 to 10.

12. A method for determining at least one center of at least one light cloud of detected scintillator photons (11) in an array (3) of photodetectors (4), the method comprising:
receiving photon detection signals from the array (3) of photodetectors (4); and
applying a cellular automaton algorithm in the spatial and the temporal domain to reduce the light cloud of the detected scintillator photons (11) to the X-ray detection signal corresponding to a single photodetector (4), wherein
cells (13) of an array (12) corresponding to the array (3) of photodetectors (4) are activated and deactivated according to automaton rules, wherein the automaton rules
comprise inspecting a status of neighboring cells (13) and/or inspecting the status of the cell (13) under consideration and/or neighboring cells (13) in previous processing cycles; and
are deterministic.

13. The method according to claim 12, wherein the automaton rules for a rectangular grid structure of cells comprise:
when the corresponding photodetector (4) is triggered, the cell (13) is activated;
if, in a neighboring column or row, no direct neighboring cells (13) are found that are active, and if the corresponding photodetector (4) is not triggered, the cell (13) is deactivated;
if the cell (13) stays active, an internal counter of the cell (13) is incremented; and
if the cell (13) is deactivated, the internal counter is greater than a predetermined threshold, no direct neighboring cell (13) is active, and no direct neighboring cell (13) has triggered an X-ray detection signal in a same evaluation cycle yet, the X-ray detection signal is triggered by the cell (13).

14. Processing electronics (5), configured to perform the method according to claim 12 or 13.

15. The processing electronics (5) according to claim 14, wherein the processing electronics (5) is an application-specific integrated circuit, ASIC.
